# EUROPÄISCHE PATENTSCHRIFT

(11) **EP 1 234 138 B1**
(45) Veröffentlichungstag und Bekanntmachung des Hinweises auf die Patenterteilung: **05.11.2003**
(21) Anmeldenummer: 00989810.7
(22) Anmeldetag: 29.11.2000
(51) Int. Cl.: F16N 29/00

(54) **ÖLSYSTEM, INSBESONDERE HYDRAULIKSYSTEM ODER SCHMIERÖLSYSTEM**
OIL SYSTEM, IN PARTICULAR A HYDRAULIC OR LUBRICATING OIL SYSTEM
SYSTEME A HUILE, EN PARTICULIER SYSTEME A HUILE HYDRAULIQUE OU SYSTEME A HUILE DE GRAISSAGE

(30) Priorität: 30.11.1999 DE 19957592
(43) Veröffentlichungstag der Anmeldung: 28.08.2002
(73) Patentinhaber: MAHLE Filtersysteme GmbH, 70376 Stuttgart (DE)
(72) Erfinder: MANZ, Rolf, D-51069 Köln (DE); WIERLING, Reinhard, D-74629 Pfedelbach (DE)
(74) Vertreter: Bernhard, Uwe
(86) Internationale Anmeldenummer: DE0004234
(87) Internationale Veröffentlichungsnummer: WO01040701

(56) Entgegenhaltungen:
- EP-A- 0 596 231
- WO-A-99/44043
- WO-A-99/58970
- GB-A- 2 194 333
- US-A- 4 499 376
- US-A- 4 967 880
- US-A- 5 599 460

## Beschreibung

Die Erfindung betrifft ein Ölsystem, insbesondere Hydrauliksystem oder Schmierölsystem mit den Merkmalen des Oberbegriffs des Anspruchs 1. Die Erfindung betrifft außerdem ein Filter für ein derartiges Ölsystem sowie die Verwendung eines Trübungssensors in einem solchen Ölsystem.

Hydrauliköle und Schmieröle sollten aus Umweltschutzgründen umweltschonend, insbesondere biologisch abbaubar ausgebildet sein. Diese Bedingungen führen zu Ölen, die eine vergleichsweise geringe Stabilität gegen hydrolytische Spaltung im Kontakt mit Wasser aufweisen. Bei Ölen, insbesondere bei biologisch schnell abbaubaren Ölen, jedoch auch bei herkömmlichen Mineralölen, trägt daher ein geringer Wassergehalt erheblich zu einer langen Ölstandzeit bei. Ein unzulässig hoher Wassergehalt kann insbesondere auf dem Weg der Hydrolyse zu Alterungsprodukten führen und Werkstoff- und Funktionsprobleme in den mit dem Öl versorgten und/oder arbeitenden Aggregaten auslösen. Ebenso können in Hydrauliksystemen gravierende Schäden oder Funktionsstörungen durch eine thermische Zersetzung des Öls, durch ein Auflösen oder durch einen chemischen Angriff von Bauteilen ausgelöst werden. Mittels eines Sensors, der den Gehalt von Verunreinigungen im Öl detektiert, können solche Schäden vermieden werden, indem z.B. das Ölsystem rechtzeitig abgeschaltet wird.

Aus der GB 2 194 333 A ist ein Sensor zur Überwachung des Verunreinigungsgehalts in einem Öl bekannt. Der Sensor sensiert einen mit dem Verunreinigungsgehalt korrelierten Wert und ist als Trübungssensor ausgebildet, der die in Abhängigkeit des Verunreinigungsgehalts entstehende Trübung des Öls mißt. Zu diesem Zweck wird das zu überwachende Öl, zumindest ein Teilstrom davon, durch eine Meßstrecke geleitet, in die Licht in das zu überwachende Öl eingestrahlt wird. Das Licht, das das Öl in der Meßstrecke transmittiert, wird gemessen und in Abhängigkeit der gemessenen Intensität des transmittierten Lichts wird ein mit dem Verunreinigungsgehalt korrelierter Signalwert generiert, der zur Überwachung des Verunreinigungsgehalts im Öl herangezogen wird.

Die US 4,499,376 zeigt eine Vorrichtung zur Messung einer Partikelverunreinigung in einer Flüssigkeit, wobei die Messungen auf der Durchlässigkeit der Flüssigkeit für Infrarotlicht basieren. Dementsprechend mißt ein Infrarotsensor eine in Abhängigkeit des Verunreinigungsgehalts entstehende Trübung der Flüssigkeit und generiert damit korrelierte elektrische Signale.

Aus der US 5,599,460 ist ein Filter für ein Ölsystem bekannt, das in seinem Gehäuse ein Filterelement sowie einen Sensor zur Überwachung des Verunreinigungsgehalts im Öl enthält. Dabei ist der Sensor stromauf des Filterelements im Gehäuse angeordnet.

Kempermann, Remmelmann und Werner stellen in ihrem Aufsatz "Perspektiven für die umweltschonende Hydraulik", abgedruckt auf den Seiten 352 bis 367 der Zeitschrift "o+p Ölhydraulik und Pneumatik", 41(1997)Nr. 5, auf Seite 359 ein Ölsystem vor, bei dem eine saugseitig an ein Reservoir angeschlossene Hydraulikpumpe druckseitig eine Zuführungsleitung mit Öl versorgt. Diese Zuführungsleitung führt das Öl einer mit dem Öl arbeitenden bzw. angetriebenen Hydraulikanordnung zu. Stromab der Hydraulikanordnung wird das Öl wieder in ein Reservoir geleitet. An die Zuführungsleitung ist stromab der Hydraulikpumpe und stromauf der Hydraulikanordnung eine Bypaßleitung angeschlossen, in der ein elektromagnetisch schaltbares Ventil sowie stromab des Ventils ein wasserabsorbierendes Filterelement angeordnet sind. Die Bypaßleitung mündet unter Umgehung der Hydraulikanordnung ebenfalls in einem Reservoir. Stromauf der Hydraulikanordnung ist in der Zuführungsleitung stromab des Bypaßanschlusses ein Sensor angeordnet, der zur Überwachung des Wassergehalts im Öl dient und das Überschreiten einer Sättigungsgrenze erkennt.

Der hierbei verwendete Sensor ermittelt die Erhöhung des Durchflußwiderstandes eines Pilotstroms durch eine Schicht von wasserabsorbierenden Stärkepolymeren. Tritt eine Übersättigung des Druckmediums, also des Hydrauliköls, auf, so quillt das Polymer durch Wasseraufnahme an. Der erhöhte Druck wirkt auf einen Differenzdruckschalter, der damit das gewünschte Warnsignal liefert. Insoweit sensiert dieser Sensor einen mit dem Wassergehalt des Öls korrelierten Wert.

Der Sensor ist mit dem oben genannten Ventil gekoppelt, das in einer ersten Schaltstellung den Bypaß sperrt und diesen in einer zweiten Schaltstellung öffnet. Sobald der Sensor das Erreichen der Sättigungsgrenze sensiert, schaltet der Sensor das Ventil, wodurch der Bypaß geöffnet wird, so daß das mit einem erhöhten Wassergehalt verunreinigte Öl das Filterelement durchströmt. Auf diese Weise kann der unerwünschte Wassergehalt im Öl reduziert werden.

Im "MSR Magazin", 1-2/1999, Seiten 10 und 11, berichtet Lauri Tuomaala von Maßnahmen zur Messung des Feuchtegehalts bzw. Wassergehalts im Öl eines Schmiersystems einer Papiermaschine. Durch die Überwachung des Wassergehalts im Öl des Schmiersystems in Verbindung mit entsprechenden Maßnahmen zur Reduzierung des Wassergehalts im Öl können die Wartungskosten der mit dem Schmiersystem ausgestatteten Anlage erheblich gesenkt und die Nutzungsdauer der Anlage verlängert werden. Zur Überwachung des Wassergehalts wird dabei ein Meßwertgeber oder Sensor verwendet, der den Wassergehalt im Öl über die Wasseraktivität mißt. Dabei korreliert die Wasseraktivität mit dem Wassergehalt im Öl.

Damit eine Waschmaschine zum Waschen von Kleidungsstücken aus ökologischen Gründen einen möglichst geringen Wasserverbrauch aufweist, können moderne Waschmaschinen mit einem Trübungssensor ausgestattet sein, der den Verschmutzungsgrad des Waschwassers mißt. Solange der Verschmutzungsgrad des zum Reinigen der Kleidungsstücke verwendeten Waschwassers unterhalb eines bestimmten Schwellwertes bleibt, braucht das Waschwasser nicht durch Frischwasser ersetzt zu werden. Auf diese Weise hängt der Wasserverbrauch dieser Waschmaschine vom Verschmutzungsgrad der damit gewaschenen Wäsche ab.

Die vorliegende Erfindung beschäftigt sich mit dem Problem, für ein Ölsystem der eingangs genannten Art zweckmäßige Möglichkeiten anzugeben, die eine preiswerte Überwachung des Verunreinigungsgehalts in Öl ermöglichen.

Dieses Problem wird erfindungsgemäß durch ein Ölsystem mit den Merkmalen des Anspruchs 1 gelöst.

Die Erfindung beruht auf dem allgemeinen Gedanken, einen an sich bekannten optisch arbeitenden Trübungssensor zur Überwachung des Verunreinigungsgehalts in Öl zu verwenden. Die Erfindung nutzt dabei die Erkenntnis, daß der Verunreingungsgehalt auch in Öl eine optisch feststellbare Trübung verursacht, die mit dem Verunreinigungsgehalt des Öls korreliert. Diese Erkenntnis ist zumindest insoweit überraschend, da Öl im Vergleich zu Wasser für sichtbares Licht relativ undurchlässig ist. Von besonderem Interesse ist dabei die Erkenntnis, daß Wasser, dessen Lichtdurchlässigkeit regelmäßig größer ist als die von Öl, unter den in einem Ölsystem herrschenden speziellen Bedingungen eine Trübung des Öls verursachen kann. Flüssigkeiten, insbesondere Wasser, führen unter den Betriebsbedingungen eines Ölsystems (Öldruck, Strömungsbedingungen, Verwirbelungen) im Öl zur Ausbildung fein verteilter Tröpfchen bzw. einer Art Emulsion. Insbesondere optische Effekte, wie Lichtbrechung und Lichtbewegung an den Mediengrenzen, führen dann zu einer Trübung des Öls.

Unter "Trübung" wird hierbei eine reduzierte Durchlässigkeit oder Transmission des Öls für Lichtstrahlen, insbesondere für Infrarotlichtstrahlen, verstanden. Da sich die Lichtdurchlässigkeit von Wasser und Öl insbesondere im Infrarotbereich stark unterscheidet, verursacht ein zunehmender Wassergehalt eine abnehmende Transmission von Infrarotlicht und somit eine zunehmende Trübung des Öls.

Da derartige Trübungssensoren an sich bekannt und im Handel preiswert erhältlich sind, ergibt sich für das erfindungsgemäße Ölsystem ein Preisvorteil. Darüber hinaus haben Versuche gezeigt, daß der Trübungssensor relativ genau arbeitet und bereits bei einem relativ kleinen Verunreinigungsgrad bzw. Wassergehalt anspricht.

Erfindungsgemäß ist der Trübungssensor stromauf eines Umschaltventils in einer Zuführungsleitung angeordnet, wobei das Umschaltventil in einer ersten Schaltstellung das Öl einer durch die Zuführungsleitung mit Öl versorgten und/oder arbeitenden Aggregateanordnung und in einer zweiten Schaltstellung einer Bypaßleitung zuführt, in der ein zur Reduktion des Verunreinigungsgehalts des durchströmenden Öls geeignetes Element angeordnet ist, wobei der Trübungssensor oder eine mit dem Trübungssensor kommunizierende Steuereinheit das Umschaltventil betätigt. Durch diese Anordnung kann der Trübungssensor einerseits das Umschalten des Umschaltventils auf die Bypaßleitung bewirken, sobald ein Schwellwert für den Verunreinigungsgehalt erreicht ist. Andererseits ermöglicht diese Anordnung auch das Zurückschalten des Umschaltventils zur Versorgung der Aggregateanordnung, sobald der Verunreinigungsgehalt wieder in einen zulässigen Bereich fällt.

Das der Erfindung zugrundeliegende Problem wird auch durch ein Filter mit den Merkmalen des Anspruchs 8 gelöst. Durch die Integration des Sensors und des Verunreinigungen reduzierenden Elements in ein Filtergehäuse sowie durch die Anordnung des Sensors innerhalb des Gehäuses stromauf eines Filterelements ergibt sich eine besonders kompakte Bauform, die außerdem gewährleistet, daß das Filterelement die Messung des Verunreinigungsgehalts im Öl nicht beeinträchtigt.

Das der Erfindung zugrundeliegende Problem wird außerdem durch ein Verfahren mit den Merkmalen des Anspruchs 9 gelöst. Das Verfahren nutzt dabei die Erkenntnis, daß bei den in einem Ölsystem herrschenden Bedingungen Licht, insbesondere Infrarotlicht, durch das Öl im wesentlichen ungehindert durchtritt, während es von Wasser mehr oder weniger absorbiert oder gestreut wird. Dementsprechend ändert sich die Transmission des Lichts durch das Öl in Abhängigkeit des Wassergehalts. Durch Auswertung der Transmission kann der Wassergehalt im Öl überwacht und durch entsprechende Betätigungen des Umschaltventils gegebenenfalls gesenkt werden.

Das der Erfindung zugrundeliegende Problem wird schließlich durch die Verwendung eines Trübungssensors gemäß den Merkmalen des Anspruchs 12 gelöst. Hierbei wird die Erkenntnis ausgenutzt, daß der zur Erkennung einer Trübung in Wasser ausgebildete Sensor bei den Betriebsbedingungen eines Ölsystems grundsätzlich auch zur Erfassung eines Verunreinigungsgehalts, insbesondere Wassergehalts, in Öl verwendbar ist, insbesondere, wenn der Sensor mit Infrarotlicht arbeitet. Da ein solcher Trübungssensor an sich bekannt ist, kann auf besonders preiswerte Weise die Überwachung des Wassergehalts im Öl eines Ölsystems realisiert werden.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine schaltplanartige Prinzipdarstellung einer ersten Ausführungsform eines erfindungsgemäß ausgebildeten Ölkreises,
- Fig. 2: eine Darstellung wie in Fig. 1, jedoch einer zweiten Ausführungsform,
- Fig. 3: eine Schnittansicht durch ein erfindungsgemäß ausgebildetes Filter einer ersten Ausführungsform,
- Fig. 4: eine vereinfachte Prinzipdarstellung eines Filters gemäß Fig. 3, jedoch einer anderen Ausführungsform,
- Fig. 5: eine Darstellung wie in Fig. 4, jedoch einer weiteren Ausführungsform,
- Fig. 6: eine Prinzipdarstellung eines Trübungssensors und
- Fig. 7: eine Detailansicht gemäß VII in Fig. 6 bei einer speziellen Ausführungsform.

Da die Verwendung eines Trübungssensors zur Überwachung des Wassergehalts von Öl in einem Ölsystem von vorrangiger Bedeutung ist, sind die nachfolgend beschriebenen Ausführungsbeispiele stets mit Bezug auf eine durch Wasser verursachte Trübung des Öls erläutert. Es versteht sich jedoch von selbst, daß der Trübungssensor grundsätzlich dazu geeignet ist, jegliche Trübung des Öls, unabhängig von deren Ursache zu überwachen. Beispielsweise kann auch der Rußgehalt des jeweiligen Öls überwacht werden. Als Öle, deren Verschmutzung oder Trübung überwacht werden soll, kommen z.B. Schmieröl, Motoröl, Heizöl, Dieselöl in Betracht. Von Interesse sind auch Anwendungen in Kraftfahrzeugen, um z.B. die Verschmutzung des Motoröls oder des Kraftstoffs, Benzin oder Diesel, zu überwachen. Beispielsweise kann im Fahrzeug der Rußgehalt im Motoröl überwacht werden, um dadurch den Verschmutzungsgrad eines Ölfilters zu ermitteln.

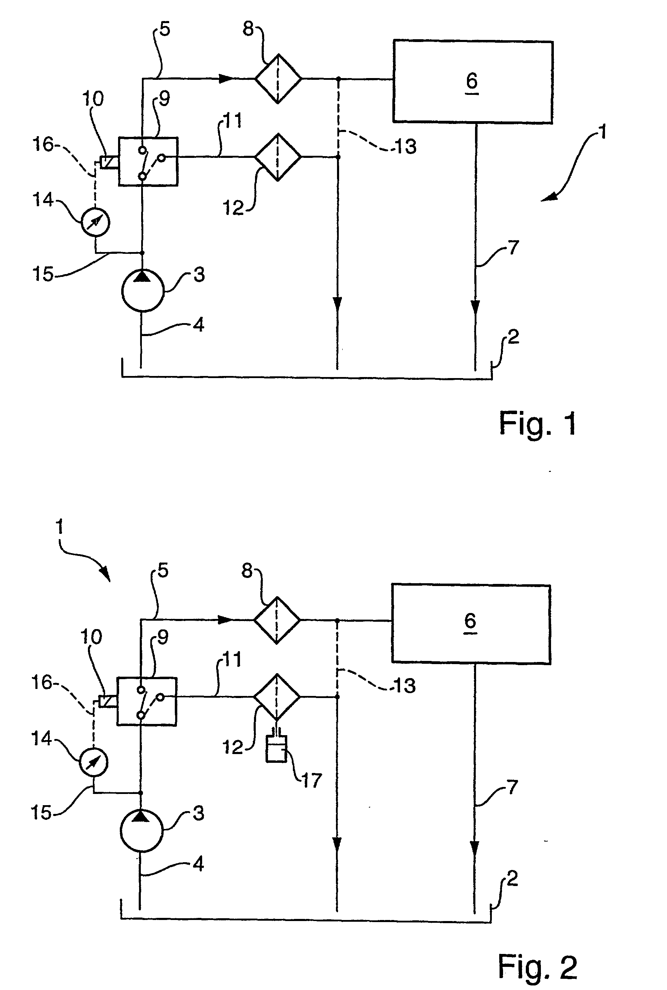

Entsprechend den Fig. 1 und 2 weist ein erfindungsgemäßes Ölsystem 1 ein Ölreservoir 2 auf, aus dem eine Ölpumpe 3 Öl ansaugt. Die Ölpumpe 3 ist dazu saugseitig über eine Saugleitung 4 mit dem Reservoir 2 verbunden. Druckseitig fördert die Ölpumpe 3 das Öl in eine Zuführungsleitung 5, die das Öl einer Aggregateanordnung 6 zuführt, die das Öl benötigt. Dabei kann die Aggregateanordnung 6 beispielsweise durch eine Maschine oder Maschinenanlage gebildet sein, die zur Schmierung mit Öl versorgt wird. Das Ölsystem 1 bildet dann ein Schmierölsystem. Ebenso kann die Aggregateanordnung 6 ein einzelnes Hydraulikaggregat oder eine komplette Hydraulikanlage, z.B. einer Maschine sein. In diesem Fall bildet das Ölsystem 1 ein Hydraulikölsystem.

Stromab der Aggregateanordnung 6 wird das Öl über eine Rückführungsleitung 7 in das Reservoir 2 zurückgeleitet. Stromauf der Aggregateanordnung 6 ist in der Zuführungsleitung 5 ein Ölfilter 8 angeordnet, das dazu dient, übliche Verunreingungen, insbesondere Schwebteilchen oder dergleichen aus dem Öl herauszufiltern. Zwischen dem Ölfilter 8 und der Ölpumpe 3 ist ein Umschaltventil 9 angeordnet, das mittels eines elektromagnetischen Stellgliedes 10 zumindest zwischen zwei Schaltstellungen umschaltbar ist. In einer ersten Schaltstellung verbindet das Umschaltventil 9 die Druckseite der Pumpe 3 mit dem zur Aggregateanordnung 6 führenden Abschnitt der Zuführungsleitung 5. In einer zweiten Schaltstellung verbindet das Umschaltventil 9 die Druckseite der Pumpe 3 mit einer Bypassleitung 11, die unter Umgehung des Ölfilters 8 und der Aggregateanordnung 6 in das Reservoir 2 zurückführt. In dieser Bypassleitung 11 ist ein Wasserentziehungselement 12 angeordnet, das bei einer Durchströmung mit Öl den Wassergehalt des Öls reduziert. Stromab des Wasserentziehungselements 12 kann die Bypassleitung 11 bei einer besonderen Ausführungsform über eine mit unterbrochener Linie dargestellte Versorgungsleitung 13 stromab des Ölfilters 8 mit der Zuführungsleitung 5 verbunden sein. Auf diese Weise kann die Aggregateanordnung 6 auch dann mit (entwässertem) Öl versorgt werden, wenn sich das Umschaltventil 9 in seiner zweiten Schaltstellung befindet. Ebenso ist eine gemischte Weiterleitung des entwässerten Öls stromab des Wasserentziehungselements 12 möglich, bei dem das Öl teilweise der Aggregateanordnung 6 und teilweise dem Reservoir 2 zugeleitet wird; auf die Darstellung entsprechender Ventilmittel ist verzichtet worden.

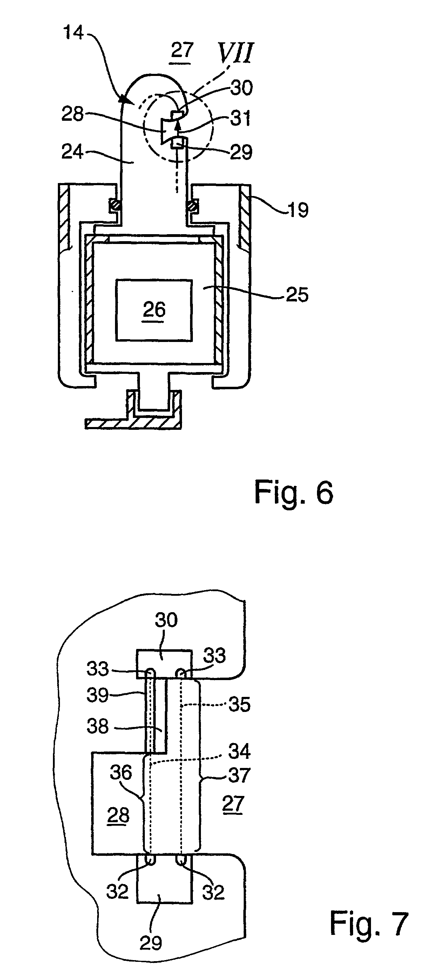

Zwischen dem Umschaltventil 9 und der Ölpumpe 3 kommuniziert ein Sensor 14 mit dem geförderten Öl. Dabei kann dieser Sensor 14, wie in den Fig. 1 und 2 dargestellt, über eine entsprechende Verbindungsleitung 15 mit der Zuführungsleitung 5 kommunizieren. Es werden jedoch Ausführungsformen bevorzugt, bei denen der Sensor 14 direkt in der Ölströmung angeordnet ist, wobei er beispielsweise in die Zuführungsleitung 5 integriert sein kann. Der Sensor 14 überwacht den Wassergehalt im Öl und betätigt über eine entsprechende Leitung 16 das Umschaltventil 9, sobald der Wassergehalt im Öl einen kritischen Wert erreicht. Erfindungsgemäß ist der Sensor 14 dabei als Trübungssensor ausgebildet, dessen Funktionsweise weiter unten, insbesondere zu Fig. 6 beschrieben wird.

Obwohl die hier gewählte Anordnung des Sensors 14 stromauf des Umschaltventils 9 bevorzugt ist, kann es durchaus sinnvoll sein, den Sensor 14 an einer anderen Stelle des Ölsystems 1 anzubringen, z.B. im Reservoir 2 oder in der Rückführungsleitung 7.

Die Ausführungsformen der Fig. 1 und 2 unterscheiden sich durch die Art des Wasserentziehungselements 12. In der Ausführungsform gemäß Fig. 1 wird das Wasserentziehungselement 12 durch einen Absorber gebildet, der in Form eines Filterelements ausgebildet sein kann. Der Absorber speichert dabei das dem Öl entzogene Wasser. Ein als Absorber ausgebildetes Wasserentziehungselement 12 enthält beispielsweise ein gelgefülltes Filterelement, das eine chemische Bindung mit dem Öl entzogenen Wasser ausbildet. Im Unterschied dazu wird das Wasserentziehungselement 12 in der Ausführungsform gemäß Fig. 2 durch einen Coalescer gebildet, der bei der Durchströmung mit wasserhaltigem Öl das Wasser vom Öl trennt und einen Abfluß des Wassers aus der Ölströmung ermöglicht. Das auf diese Weise entzogene Wasser kann in einem separaten Behälter 17 gesammelt werden. Da sowohl Absorber als auch Coalescer allgemein bekannt sind, kann eine tiefergehende Beschreibung dieser Bauteile entfallen.

Das in den Ausführungsformen der Fig. 1 und 2 vorgestellte Ölsystem 1 arbeitet wie folgt:

In einem Normalbetrieb, enthält das Öl eine zulässige Menge an Verunreinigungen, insbesondere an Wasser, so daß der Trübungssensor 14 oder ein damit gekoppeltes Steuergerät das Umschaltventil 9 in dessen erste Schaltstellung schaltet. Dementsprechend fließt das Öl durch den Ölfilter 8 zur Aggregateanordnung 6. Da die Bypassleitung 11 im Normalbetrieb nicht durchströmt wird, kann sich auch keine Durchströmung des Wasserentziehungselements 12 ausbilden, so daß dieses im Normalbetrieb geschont wird und für einen Notbetrieb einsatzbereit ist.

Sobald der Trübungssensor 14 einen unzulässig hohen Verunreinigungsgehalt bzw. Wassergehalt im Öl feststellt, wird das Umschaltventil 9 in seine zweite Schaltstellung geschaltet, wodurch ein Notbetrieb aktiviert wird. Das in Besonderheit mit Wasser beladene Öl wird dann dem Bypass 11 zugeleitet und durchströmt das Wasserentziehungselement 12. Dieser Notbetrieb wird solange aufrecht erhalten, bis der Trübungssensor 14 wieder einen zulässigen Verunreinigungs- bzw. Wassergehalt sensiert und in den Normalbetrieb zurückschaltet, bzw. das Umschaltventil 9 in seine erste Schaltstellung umschaltet.

Da ein herkömmliches Ölfilter auch die Eigenschaft besitzen kann, Wasser aus dem Öl herauszuziehen, kann das Ölfilter 8 bei einem unzulässig hohen Wassergehalt rasch gesättigt werden. Da der Bypass 11 das Ölfilter 8 umgeht, kann dies vermieden werden.

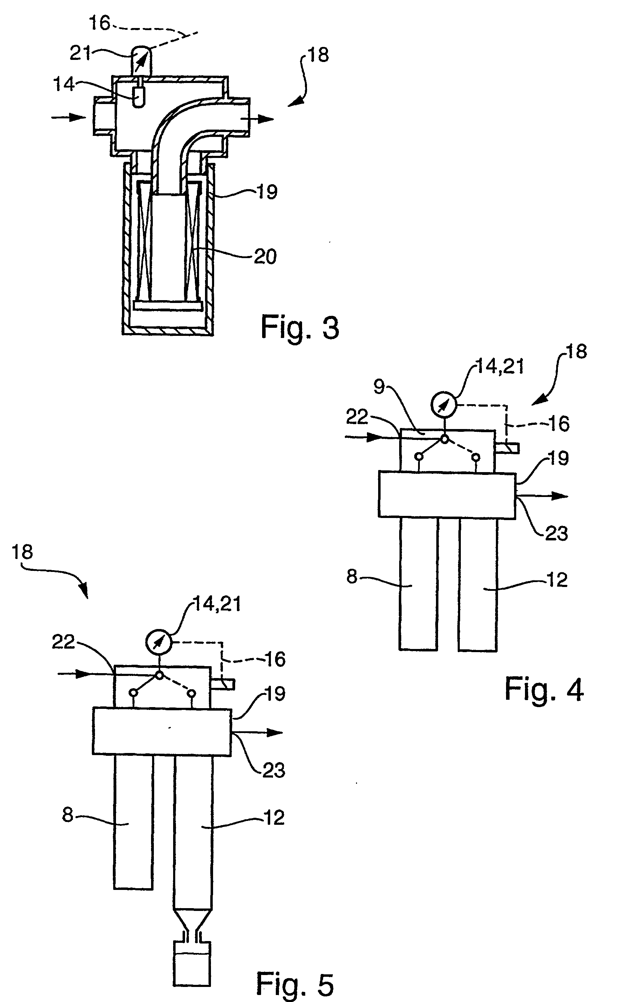

Entsprechend den Fig. 3, 4 und 5 weist ein erfindungsgemäßes Filter 18 ein Gehäuse 19 auf, in dem ein Filterelement 20 angeordnet ist. Das Filterelement 20 kann dabei ein Ölfilterelement sein, so daß das Filter 18 ein Ölfilter bildet, das beispielsweise dem Ölfilter 8 des in den Fig. 1 und 2 dargestellten Ölsystems 1 entspricht. Ebenso kann das Filterelement 20 ein Absorberfilterelement sein.

Im Gehäuse 19 des Filters 18 ist stromauf des Filterelements 20 der Trübungssensor 14 angeordnet. Eine Auswerteeinheit oder ein Steuergerät 21 des Trübungssensors 14 steht dann über die Leitung 16 mit dem Umschaltventil 9 in Verbindung.

Entsprechend einer bevorzugten Ausführungsform gemäß Fig. 4 kann das Umschaltventil 9 in das Gehäuse 19 des Filters 18 integriert sein. Außerdem sind im Gehäuse 19 sowohl das Ölfilter 8 als auch das Wasserentziehungselement 12 ausgebildet, wobei im Inneren des Gehäuses 19 dementsprechend getrennte Strömungswege ausgebildet sind. Das Umschaltventil 9 schaltet dabei einen Eingang 22 des Filters 18 im Normalbetrieb auf das Ölfilter 8 und im Notbetrieb auf das Wasserentziehungselement 12. Bei den in den Fig. 5 dargestellten Ausführungsformen weist das Filtergehäuse 19 nur einen Ausgang 23 auf; ebenso kann eine Ausführungsform mit zwei Ausgängen vorgesehen sein.

Die Ausführungsformen der Fig. 4 und 5 unterscheiden sich im wesentlichen wieder durch die Art des Wasserentziehungselements 12, das bei der Variante gemäß Fig. 4 vorzugsweise durch einen Absorber und bei der Variante gemäß 5 vorzugsweise durch einen Coalescer gebildet wird.

Entsprechend Fig. 6 weist ein erfindungsgemäßer Trübungssensor 14 einen zapfenartigen Sensorabschnitt 24 sowie eine Steuereinheit 25 auf, die eine Elektronik 26 sowie ein Steuergerät, eine Auswerteeinheit und dergleichen beinhalten kann. Der Sensor 14 wird so montiert, daß sein Sensorabschnitt 24 in einen vom zu überwachenden Öl durchströmten Raum 27 hineinragt, wobei die Steuereinheit 25 außerhalb des Raumes 27 angeordnet sein kann. Dementsprechend durchdringt der Sensorabschnitt 24 beispielsweise das Gehäuse 19.

Der Sensor 14 weist in seinem Sensorabschnitt 24 eine Meßstrecke 28 auf, die zum Raum 27 hin offen ist und dementsprechend von dem im Raum 27 befindlichen Öl durchdrungen bzw. durchströmbar ist. Des weiteren ist wenigstens ein Sender 29 vorgesehen, der Licht, vorzugsweise Infrarotlicht in die Meßstrecke 28 und somit in das darin befindliche Öl einstrahlt. Das Infrarotlicht durchquert die Meßstrecke 28 und trifft im allgemeinen auf wenigstens einen Empfänger 30, der die ankommende Lichtintensität bzw. Lichtstärke sensiert. Die Transmission des Infrarotlichts durch die Meßstrecke 28 bzw. durch das darin befindliche Öl ist in Fig. 6 durch einen Pfeil 31 symbolisch dargestellt.

Sender 29 und Empfänger 30 sind mit der Steuereinheit 25 verbunden, in der z.B. eine Auswerteeinheit einen mit der Transmission 31 korrelierte Signalwert erzeugen kann. Da für den Lichtstrahl bestimmte Lichtwellenlängen insbesondere im Infrarotbereich bevorzugt werden, kann der Lichtstrahl ungetrübtes Öl nahezu ungehindert durchlaufen, während der Lichtstrahl mit zunehmendem Wassergehalt, d.h. mit zunehmender Trübung zunehmend behindert wird. Mit anderen Worten, je größer der Wassergehalt im Öl, desto weniger Licht kann vom Empfänger 30 sensiert werden. Die Reduzierung der Infrarotlichttransmission mit zunehmendem Wassergehalt ergibt sich einerseits durch eine Absorbtionswirkung des Wassers bezüglich Infrarotlicht. Andererseits tritt das Wasser im Ölsystem regelmäßig als Emulsion im Öl auf, so daß auch Beugungs-, Brechungs- und Streuungseffekte die Transmission behindern können.

Versuche haben ergeben, daß der Sensor 14 beim Betrieb mit einer Lichtwellenlänge von 750 nm bis 1000 nm vorzugsweise von 880 nm, eine besonders hohe Empfindlichkeit bezüglich in Öl enthaltenem Wasser aufweist, so daß bereits ein relativ kleiner Wassergehalt im Öl festgestellt werden kann.

In Fig. 7 ist ein in Fig. 6 mit VII bezeichnetes Detail des Sensors 14 bei einem vergrößerten Maßstab wiedergegeben, jedoch bei einer bevorzugten Ausführungsform. Der Sensor 14 besitzt hier eine Sendereinheit 29, die zwei Sendestellen 32 aufweist. Diese Sendestellen 32 können beispielsweise durch zwei Blenden gebildet sein, die von einem gemeinsamen Sender beaufschlagt werden. Ebenso kann für jede Sendestelle 32 ein separater Sender vorgesehen sein. Desweiteren besitzt der Sensor 14 eine Empfängereinheit 30, die zwei Empfangsstellen 33 aufweist. Auch hier können die Empfängerstellen 33 durch Blenden gebildet sein, denen ein gemeinsamer Empfänger zugeordnet ist. Alternativ können den Empfängerstellen 33 jeweils ein separater Empfänger zugeordnet sein.

Zwischen der Sendereinheit 29 und der Empfängereinheit 30 ist die Meßstrecke 28 ausgebildet, die mit dem Raum 27 kommuniziert, so daß die Meßstrecke 28 mit dem zu überwachenden Öl beaufschlagbar ist. Zwischen der Sendereinheit 29 und der Empfängereinheit 30 sind außerdem zwei separate Signalwege oder Lichtwege 34 und 35 ausgebildet, die hier durch punktierte Linien symbolisiert sind. Die beiden Signalwege 34, 35 unterscheiden sich voneinander hinsichtlich ihrer Erstreckungslänge 36 bzw. 37, mit der sie innerhalb der Meßstrecke 28, also durch das zu überwachende Öl, verlaufen. Im vorliegenden Fall verlaufen beide Signalwege 34 und 35 zumindest teilweise innerhalb der Meßstrecke 28. Ebenso ist eine Ausführungsform möglich, bei der die eine Signalstrecke 34 vollständig außerhalb der Meßstrecke 28 verläuft. Die unterschiedlichen Erstreckungslängen 36 und 37 werden hier durch eine Stufe 38 erzielt, die in die Meßstrecke 28 hineinragt. In dieser Stufe 38 ist eine lichtdurchlässige Leitung 39 ausgebildet, z.B. in Form einer Bohrung oder eines Lichtleiters.

Mit Hilfe dieser Anordnung kann beispielsweise der Verschmutzungsgrad aus einem Vergleich der an den Empfangsstellen 33 sensierten Empfangssignale ermittelt werden. Hierdurch wird die Messung unabhängig von Stromschwankungen oder Spannungsschwankungen sowie Alterungserscheinungen bei der Sendereinheit 29 bzw. bei der Empfängereinheit 30, da sich diese bei beiden Signalwegen 34, 35 in der gleichen Weise auswirken. Darüber hinaus kann diese Anordnung auch dazu verwendet werden, die ordnungsgemäße Funktionsweise des Sensors 14 zu überwachen. Durch die unterschiedlichen Erstrekkungslängen 36 und 37 sind die im Falle einer Trübung sensierbaren Empfangssignale bei den beiden Signalwegen 34, 35 zwangsläufig unterschiedlich. Bei zunehmender Trübung nehmen die beiden Empfangssignale gemäß eines ersten funktionalen Zusammenhanges unterschiedlich stark ab. Wenn beispielsweise aufgrund einer Stromschwankung die Sendeleistung der Sendereinheit 29 abnimmt, hat dies zur Folge, daß beide Empfangssignale dann gemäß eines zweiten funktionalen Zusammenhanges abnehmen. Dieser Unterschied kann von einer entsprechenden Auswerteeinrichtung erkannt werden.

## Patentansprüche

1. Ölsystem, insbesondere Hydrauliksystem oder Schmierölsystem, mit einem Sensor (14) zur Überwachung des Verunreinigungsgehalts im Öl des Ölsystems (1), der einen mit dem Verunreinigungsgehalt korrelierten Wert sensiert, wobei der Sensor als Trübungssensor (14) ausgebildet ist, der die in Abhängigkeit des Verunreinigungsgehalts entstehende Trübung des Öls mißt, wobei der Trübungssensor (14) in einer Zuführungsleitung (5) stromauf einer mit Öl versorgten und/oder arbeitenden Aggregateanordnung (6) angeordnet ist,
**dadurch gekennzeichnet,**
**daß** der Trübungssensor (14) stromauf eines Umschaltventils (9) in der Zuführungsleitung (5) angeordnet ist, wobei das Umschaltventil (9) in einer ersten Schaltstellung das Öl der Aggregateanordnung (6) und in einer zweiten Schaltstellung einer Bypaßleitung (11) zuführt, in der ein zur Reduktion des Verunreinigungsgehalts des durchströmenden Öls geeignetes Element (12) angeordnet ist, wobei der Trübungssensor (14) oder ein mit dem Trübungssensor (14) kommunizierendes Steuergerät (21) das Umschaltventil (9) betätigt.

2. Ölsystem nach Anspruch 1,
**dadurch gekennzeichnet,**
**daß** der Trübungssensor (14) einen Signalwert generiert, der mit der Trübung korreliert, die der Verunreinigungsgehalt im Öl ausbildet.

3. Ölsystem nach Anspruch 1 oder 2,
**dadurch gekennzeichnet,**
**daß** der Trübungssensor (14) stromauf eines Filterelements (8) in der Zuführungsleitung (5) angeordnet ist.

4. Ölsystem nach einem der Ansprüche 1 bis 3,
**dadurch gekennzeichnet,**
**daß** das zur Reduktion des Verunreinigungsgehalts geeignete Element (12) durch einen Absorber oder durch einen Coalescer gebildet ist, der den Gehalt flüssiger Verunreinigungen im Öl reduziert.

5. Ölsystem nach einem der Ansprüche 1 bis 4,
**dadurch gekennzeichnet,**
**daß** die Bypaßleitung (11) in einem Reservoir (2) und/oder stromab des Filterelements (8) sowie stromauf der Aggregateanordnung (6) in die Zuführungsleitung (5) mündet.

6. Ölsystem nach einem der Ansprüche 1 bis 5,
**dadurch gekennzeichnet,**
**daß** der Trübungssensor (14) wenigstens einen Sender (29) und wenigstens einen Empfänger (30) aufweist, zwischen denen eine mit dem zu überwachenden Öl beaufschlagte Meßstrecke (28) sowie zwei separate Signalwege (34,35) ausgebildet sind, wobei wenigstens einer der Signalwege (34,35) innerhalb der Meßstrecke (28) verläuft und wobei sich die beiden Signalwege (34,35) hinsichtlich ihrer Erstreckungslänge (36,37) innerhalb der Meßstrecke (28) voneinander unterscheiden.

7. Ölsystem nach Anspruch 6,
**dadurch gekennzeichnet,**
**daß** zur Ermittlung des mit der Trübung korrelierten Signalwertes und/oder zur Überwachung der ordnungsgemäßen Funktion des Trübungssensors (14) das über den einen Signalweg (34) empfangene Empfangssignal mit dem über den anderen Signalweg (35) empfangenen Empfangssignal verglichen wird.

8. Filter für ein Ölsystem, insbesondere nach einem der Ansprüche 1 bis 7, wobei das Ölsystem (1) einen Sensor (14) zur Überwachung des Verunreinigungsgehalts im Öl des Ölsystems (1) aufweist, der einen mit dem Verunreinigungsgehalt korrelierten Wert sensiert, wobei das Filter (18) ein Gehäuse (19) aufweist, in dem ein Filterelement (8) zum Reinigen des Öls angeordnet ist, wobei der Sensor (14) im Gehäuse (19) stromauf des Filterelements (8) angeordnet ist,
**dadurch gekennzeichnet,**
**daß** im Gehäuse (19) außerdem ein Element (12) zur Reduzierung des Verunreinigungsgehalts im Öl angeordnet ist, wobei im Gehäuse (19) außerdem ein Umschaltventil (9) angeordnet ist, das in einer ersten Schaltstellung einen Eingang (22) des Gehäuses (19) mit dem Ölfilterelement (8) und in einer zweiten Schaltstellung den Eingang (22) mit dem Reduzierelement (12) verbindet.

9. Verfahren zur Überwachung des Verunreinigungsgehalts im Öl eines Ölsystems nach einem der Ansprüche 1 bis 7, bei dem das zu überwachende Öl, zumindest ein Teilstrom davon, durch eine Meßstrecke (28) geleitet wird, bei dem in die Meßstrekke (28) Licht in das zu überwachende Öl eingestrahlt wird, bei dem das Licht, das das Öl in der Meßstrecke (28) transmittiert, gemessen wird, bei dem in Abhängigkeit der gemessenen Intensität des transmittierten Lichts ein mit dem Verunreinigungsgehalt korrelierter Signalwert generiert wird, der zur Überwachung des Verunreinigungsgehalts im Öl herangezogen wird,
**dadurch gekennzeichnet,**
**daß** das Umschaltventil (9) für einen Normalbetrieb, bei dem das Öl einen zulässigen Verunreinigungsgehalt aufweist, in die erste Schaltstellung geschaltet wird, in der das Öl durch ein Ölfilter (8) zur Aggregateanordnung (6) fließt,
wobei das Umschaltventil (9) für einen Notbetrieb, bei dem das Öl einen unzulässig hohen Verunreinigungsgehalt aufweist, in die zweite Schaltstellung geschaltet wird, in der das Öl durch die Bypaßleitung (11) und das Reduzierelement (12) fließt.

10. Verfahren nach Anspruch 9,
**dadurch gekennzeichnet,**
**daß** als Licht Infrarotlicht verwendet wird, das eine Wellenlänge von 750 nm bis 1000 nm, vorzugsweise von 880 nm aufweist.

11. Verfahren nach Anspruch 9 oder 10,
**dadurch gekennzeichnet,**
**daß** zur Ermittlung des mit der Trübung korrelierten Signalwertes und/oder zur Überwachung der ordnungsgemäßen Funktion des Trübungssensors (14) eine erste gemessene Intensität mit einer zweiten gemessenen Intensität verglichen wird, wobei die beiden Intensitäten verschiedenen Lichtwegen (34,35) zugeordnet sind, die sich hinsichtlich ihrer Erstreckungslänge (36,37) innerhalb der Meßstrecke (28) voneinander unterscheiden.

12. Verwendung eines Trübungssensors (14) mit einer Meßstrecke (28), die für eine Durchströmung mit einer zu überwachenden Flüssigkeit geeignet ist, mit mindestens einem Sender (29), der Licht in die Meßstrecke (28) in die Flüssigkeit einstrahlt, mit mindestens einem Empfänger (30), der die Lichtstärke des Lichts mißt, das in der Meßstrecke (28) durch die Flüssigkeit transmittiert, zur Durchführung des Verfahrens nach einem der Ansprüche 9 bis 11.

## Claims

1. An oil system, in particular a hydraulic system or a lubricating oil system, having a sensor (14) for monitoring the impurity content in the oil in the oil system (1), which senses a value that correlates with the impurity content, whereby the sensor is designed as a turbidity sensor (14) which measures the turbidity of the oil which occurs as a function of the impurity content, whereby the turbidity sensor (14) is situated in a feeder line (5) upstream from an equipment arrangement (6) which is supplied with and/or works with oil,
**characterized in that**
the turbidity sensor (14) is arranged upstream from a switching valve (9) in the feeder line (5), whereby the switching valve (9) in a first switch position supplies the oil to the equipment arrangement (6), and in a second switch position it supplies oil to a bypass line (11) in which is arranged an element (12) suitable for reducing the impurity content in the oil flowing through the element, whereby the turbidity sensor (14) or a controller (21) which communicates with the turbidity sensor (14) actuates the switching valve (9).

2. The oil system according to Claim 1,
**characterized in that** the
turbidity sensor (14) generates a signal value which correlates with the turbidity which occurs due to the impurity content in the oil.

3. The oil system according to Claim 1 or 2,
**characterized in that**
the turbidity sensor (14) is arranged in the feeder line (5) upstream from a filter element (8).

4. The oil system according to one of Claims 1 through 3,
**characterized in that**
the element (12) suitable for reducing the impurity content is formed by an absorber or by a coalescer which reduces the liquid impurities content in the oil.

5. The oil system according to one of Claims 1 through 4,
**characterized in that**
the bypass line (11) in a reservoir (2) and/or downstream from the filter element (8) and upstream from the equipment arrangement (6) opens into the feeder line (5).

6. The oil system according to one of Claims 1 through 5,
**characterized in that**
the turbidity sensor (14) has at least one transmitter (29) and at least one receiver (30), between which is formed a measuring distance (28), which receives the oil to be monitored, and two separate signal paths (34, 35), whereby at least one of the signal paths (34, 35) runs inside the measuring distance (28), and whereby the two signal paths (34, 35) differ from one another with regard to the length of their segments (36, 37) within the measuring distance (28).

7. The oil system according to Claim 6, **characterized in that**
to determine the signal value which correlates with the turbidity and/or to monitor for proper functioning of the turbidity sensor (14), the received signal received over the one signal path (34) is compared with the received signal received over the other signal path (35).

8. A filter for an oil system, in particular according to one of Claims 1 through 7, whereby the oil system (1) has a sensor (14) for monitoring the impurity content in the oil of the oil system (1), which senses a value that correlates with the impurity content, whereby the filter (18) has a housing (19) in which a filter element (8) is arranged for purifying the oil, whereby the sensor (14) is situated in the housing (19) upstream from the filter element (8)
**characterized in that**
an element (12) for reducing the impurity content in the oil is also arranged in the housing (19), whereby in addition, a switching valve (9) is also arranged in the housing (19), so that in a first switch position it connects an inlet (22) of the housing (19) to the oil filter element (8), and in a second switch position it connects the inlet (22) to the reducing element (12).

9. A method of monitoring the impurity content in the oil of an oil system according to one of Claims 1 through 7, whereby the oil to be monitored or at least a partial stream thereof is sent through a measuring distance (28); light is beamed into the oil to be monitored in the measuring distance (28); the light transmitted by the oil in the measuring distance (28) is measured; a signal value that correlates with the impurity content in the oil is generated as a function of the measured intensity of the transmitted light and is used to monitor the impurity content in the oil
**characterized in that**
for normal operation in which the oil has an admissible impurities content, the switching valve (9) is switched to the first switch position, in which th oil flows through an oil filter (8) to the equipment arrangement (6), whereby for emergency operation in which the oil has an inadmissibly high impurities content, the switching valve (9) is switched to the second switch position in which the oil flows through the bypass line (11) and the reducing element (12).

10. The method according to Claim 9,
**characterized in that**
the light used is infrared light which has a wavelength of 750 nm to 1000 nm, preferably 880 nm.

11. The method according to Claim 9 or 10,
**characterized in that**
to determine the signal value that correlates with the turbidity and/or to monitor for proper functioning of the turbidity sensor (14), a first measured intensity is compared with a second measured intensity, whereby the two intensities are assigned to different light paths (34, 35) which differ with regard to the length of their segments (36, 37) within the measuring distance (28).

12. A use of a turbidity sensor (14) having a measuring distance (28) which is suitable for through-flow with a liquid to be monitored, having at least one transmitter (29) which beams light into the measuring distance (28) in the liquid, having at least one receiver (30) which measures the intensity of the light which is transmitted through the liquid in the measuring distance (28) for carrying out the method according to one of Claims 9 through 11.

## Revendications

1. Système à huile, en particulier système à huile hydraulique ou système à huile de graissage, présentant un capteur (14) pour surveiller le taux d'impuretés de l'huile d'un système à huile (1) qui capte une valeur corrélée au taux d'impuretés, le capteur étant réalisé en tant que capteur de turbidité (14) qui mesure la turbidité de l'huile apparaissant en fonction du taux d'impuretés, le capteur de turbidité (14) étant disposé dans une conduite d'alimentation d'un groupe (6) alimenté et/ou travaillant avec de l'huile
**caractérisé en ce**
**que** le capteur de turbidité (14) est disposé en amont d'une vanne de commutation (9) dans la conduite d'alimentation (5), la vanne de commutation (9) acheminant l'huile vers le groupe (6) dans une première position de commutation et vers un bipasse (11) dans une deuxième position de commutation, dans lequel est disposé un élément (12) approprié pour réduire le taux d'impuretés de l'huile circulant, le capteur de turbidité (14) ou un appareil de commande (21) communiquant avec le capteur de turbidité (14) actionnant la vanne de commutation (9).

2. Système à huile selon la revendication 1,
**caractérisé en ce**
**que** le capteur de turbidité (14) génère une valeur de signal, corrélée à la turbidité, qui représente le taux d'impuretés de l'huile.

3. Système à huile selon la revendication 1 ou 2,
**caractérisé en ce**
**que** le capteur de turbidité (14) est disposé dans la conduite d'alimentation (5), en amont d'un élément filtrant (8).

4. Système à huile selon l'une des revendications 1 à 3,
**caractérisé en ce**
**que** l'élément (12) approprié pour réduire le taux d'impuretés est formé par un absorbeur ou un coalesceur, qui réduit le taux d'impuretés liquides de l'huile.

5. Système à huile selon l'une des revendications 1 à 4,
**caractérisé en ce**
**que** le bipasse (11) débouche dans un réservoir (2) et/ou en aval de l'élément filtrant (8) ainsi qu'en amont du groupe (6) dans la conduite d'alimentation (5).

6. Système à huile selon l'une des revendications 1 à 5,
**caractérisé en ce**
**que** le capteur de turbidité (14) présente au moins un émetteur (29) et au moins un récepteur (30), entre lesquels sont formées une section de mesure (28) alimentée avec l'huile à surveiller ainsi que deux voies de signaux (34, 35) distinctes, au moins l'une des voies de signaux (34, 35) s'étendant à l'intérieur de la section de mesure (28) et les deux voies de signaux (34, 35) se distinguant l'une de l'autre par leur longueur d'extension (36, 37) à l'intérieur de la section de mesure (28).

7. Système à huile selon la revendication 6,
**caractérisé en ce**
**que** pour déterminer la valeur de signal corrélée à la turbidité et/ou pour surveiller le bon fonctionnement du capteur de turbidité (14) le signal de réception reçu par la voie de signaux (34) est comparé au signal de réception reçu par l'autre voie de signaux (35).

8. Filtre pour un système à huile, en particulier selon l'une des revendications 1 à 7, dans lequel le système à huile (1) présente un capteur (14) pour surveiller le taux d'impuretés de l'huile d'un système à huile (1), qui capte une valeur corrélée au taux d'impuretés, le filtre (18) présentant un carter (10), dans lequel est disposé l'élément filtrant (8) destiné à épurer l'huile, le capteur (14) étant disposé dans le carter (19) en amont de l'élément filtrant (8),
**caractérisé en ce**
**que** dans le carter (19) est disposé en outre un élément (12) destiné à réduire le taux d'impuretés de l'huile, dans le carter (19) étant en outre disposée une vanne de commutation (9) qui commute une entrée (22) du carter (19) avec l'élément filtrant (8) dans une première position de commutation et l'entrée (22) avec l'élément de réduction (12) dans une deuxième position de commutation.

9. Procédé de surveillance du taux d'impuretés de l'huile d'un système à huile selon l'une des revendications 1 à 7, dans lequel l'huile à surveiller, du moins un flux partiel de celle-ci, est acheminée via une section de mesure (28), dans lequel de la lumière est diffusée dans la section de mesure (28) dans l'huile à surveiller, la lumière que transmet l'huile dans la section de mesure (28) étant mesurée et, en fonction de l'intensité mesurée de la lumière transmise, une valeur de signal corrélée au taux d'impuretés étant générée qui est employée pour la surveillance du taux d'impuretés de l'huile
**caractérisé en ce**
**que** la vanne de commutation (9) pour un mode de service normal, dans lequel l'huile présente un taux d'impuretés admissible, est commutée dans la première position de commutation dans laquelle l'huile s'écoule via un filtre à huile (8) vers le groupe (6), la vanne de commutation (9) pour un mode de service de secours dans lequel l'huile présente un taux d'impuretés non admissible, étant commutée dans la deuxième position de commutation dans laquelle l'huile s'écoule via le bipasse (11) et l'élément de réduction (12).

10. Procédé selon la revendication 9,
**caractérisé en ce**
**qu'**est utilisée comme lumière de la lumière infrarouge, qui présente une longueur d'ondes de 750 nm à 1000 nm, de préférence de 880 nm.

11. Procédé selon la revendication 9 ou 10,
**caractérisé en ce**
**que** pour déterminer la valeur de signal corrélée à la turbidité et/ou pour surveiller le bon fonctionnement du capteur de turbidité (14) une première intensité mesurée est comparée à une seconde intensité mesurée, les deux intensités étant associées à différentes voies de lumière (34, 35), qui se distinguent l'une de l'autre par leur longueur d'extension (36, 37) à l'intérieur de la section de mesure (28).

12. Utilisation d'un capteur de turbidité (14) présentant une section de mesure (28) qui est appropriée pour être traversée par un liquide à surveiller, comportant au moins un émetteur (29), qui émet de la lumière dans la section de mesure (28) dans le liquide, comportant au moins un récepteur (29) qui mesure l'intensité lumineuse de la lumière, qui est transmise par le liquide dans la section de mesure (28) pour mettre en oeuvre le procédé selon l'une des revendications 9 à 11.
